# EUROPEAN PATENT SPECIFICATION

(11) **EP 3 066 003 B1**
(45) Date of publication and mention of the grant of the patent: **15.05.2019**
(21) Application number: 14765909.8
(22) Date of filing: 09.09.2014
(51) Int. Cl.: B63B 1/34, B63B 1/06

(54) **BOWS OF BOATS**
BOOTSBÜGE
PROUES DE BATEAUX

(30) Priority: 09.09.2013 ES 201331314
(43) Date of publication of application: 14.09.2016
(73) Proprietor: Quer Puignau, Josep Maria, 17489 Port de la Selva (ES)
(72) Inventor: Quer Puignau, Josep Maria, 17489 Port de la Selva (ES)
(74) Representative: ZBM Patents - Zea, Barlocci & Markvardsen
(86) International application number: PCT/EP2014/069175
(87) International publication number: WO 2015/032969

(56) References cited:
- EP-A1- 0 038 895
- WO-A1-2010/144068
- US-A- 1 857 960
- US-A- 4 409 922

## Description

The invention relates to bows for boats and in particular to bows having a structure suitable for atomization of water. Such bow is known for example from US1857960. The invention also refers to hulls and boats.

In particular, the object of the invention focuses on the development of bows as front parts of hulls of a new or existing boat, preferably a motor boat of the speedboat or planing type, although this does not suppose a strict limitation. The proposed structural configurations of the bows have particular designs and configurations studied specifically to provide important advantages in the performance of the boat in its displacement by sea. Such advantages are reflected, in particular, in obtaining an atomization of the water at the surface that results in a reduction of the resistance and, therefore, a fuel saving in addition to greater comfort in navigation, avoiding or diminishing impacts known as slamming.

### TECHNICAL FIELD

The field of application of the present invention is focused on the technical sector of the nautical industry, focusing particularly on the field of the boat's design and construction, optionally of speedboats or planing boats, and more specifically on the design and construction of the hull thereof.

### BACKGROUND OF THE INVENTION

As is well known, the hull of a boat, in addition to providing the sealing and stiffness of the bottom, depending on the form it takes, determines how its displacement on the water surface occurs.

The hull can present a flat, round or broken bottom, in a U shape, a smooth V or a deep V shape, and have different bow types, namely, a straight bow, a conventional clipper bow, a trawler bow, violin bow, bulbous bow, a spoon bow, etc.

Vessels with a flat or smooth V bottom hull have the advantage of taking off from the water quickly and they are able to plane in a few seconds, thus reducing fuel consumption. In addition, they allow for a greater interior space and they are often used to transport cargo, passengers or tourists, as well as for sport fishing.

Generally, when speaking of a speed hull, one usually refers to a deep-V shaped hull, since speedboats present this type of hull. For instance boats used for navigation "offshore" may have such a deep V shaped hull because they minimize impacts produced by the waves.

In this type of hull, the hull becomes thinner and thinner towards the bow, where it presents a particularly sharp cutwater at the stem, whereas two ribs are progressively protruding from the middle of the hull towards the stern, which serve as lateral support: the so-called spray-rails.

As a boat planes, in spite of its weight, it rises above the water thanks to the pressure of the hull on the water surface. By rising out of the water, the drag of the boat is reduced, which allows the speed to increase. Thus, although the ideal shape in order to plane would be that of a completely flat hull, it would be very uncomfortable when facing high speed waves since this shape of a flat hull is not able to cut through the waves. Most planing boats have a V-shaped hull. By means of their design of such hull and thanks to the installed drive power, they are able to sail faster keeping part of the hull out of the water.

Today's bows and hulls of planing and semiplaning boats were developed during the 60's, among which the Levi bow, Don Aronow bow and Cigarrette type boats may be mentioned particularly.

Such bows are bows launched with a sharp V-shape, in order to obtain "offshore" navigations. The sharp V shape, together with a narrow hull vessel, resulted in speed hulls with offshore navigation capabilities.

The races of this type of monohull boats ("powerboats"), when sailing at high speeds, have resulted in accidents basically due to the fact that the boat poked and plunged into the water, with fatal results.

We see, therefore, that the danger of a fast planing monohull boat lies in that the bow submerges in the waves. These dangers, so far, are solved by making boats of greater length and longer slope; however, when the boats are bigger, they are heavier and require more power, and thus consume more fuel. Consequently, larger fuel tanks would be needed.

A current trend in the field of the design of sailboats is to extend the waterline length, so that the bow is almost straight at its very beginning and the slope is distributed only in the bottom part of the vessel. Examples of these are Wally Power boats, among others. This is an interesting variant and adds an improvement in adding more volume to the bow, which is good. However, though it attacks the problem, it does not solve it completely.

The origin of the present invention are current requirements for the existence of monohulls for passengers with high stability, that have a small length while having sufficient capacity for many passengers, and performing a safer and more economical sailing.

Bows in classic deep V-shape together with a long slope of the bow guarantee the avoidance of violent impacts, while providing comfort and seaworthiness to the vessel. However water soaks the bow and climbs onto it. When the water hits a deep bow that has little buoyancy, the bow becomes very much immersed in the water, which has a dangerous effect. Such effect consists therein that this type of bow is submerged in the water until a point where it slows down the boat, due to the fact that a great wet surface exists, where the viscous effect of the water progressively slows down the front part of the boat and, due to the principle of energy conservation, the boat tends to stick the bow into the water.

Well, the object of the present invention is to develop new types of bows, particularly for planing boats, through which the advantages of a flat hull and hull with a deep-V shaped hull are combined. In particular examples, thanks to their particular configuration, they can also be able to allow the improvement of both things by reducing the drag from the water, thereby obtaining an increase in sliding capacity and, simultaneously, significant fuel savings.

### SUMMARY

In particular, the invention provides a bow according to claim 1, namely a bow for a hull of a vessel that has a plane of symmetry extending along a longitudinal axis and a vertical axis of the hull, the bow being substantially V-shaped and having a stem and a keel. A base portion which is arranged just above the keel extends downstream from at or near the stem and comprises a substantially smooth base surface on each side of the plane of symmetry. Each of the base surfaces is delimited in the longitudinal direction by a first lateral step portion which extends substantially vertically, wherein the first lateral step portion is a step inwards as seen from the front constituting an air channel with an air inlet, and the first lateral step portion is arranged such as to cause water flow separation from the bow, resulting in cavitation. Throughout the present application, a bow may be regarded as a front end of a hull. A stem herein may be regarded as the most forward line of a cross-section of the hull with the plane of symmetry. And a keel may be regarded as the longitudinal bottom mid-portion of the hull. A step or step portion herein may be regarded as an abrupt change in tangent along a surface, i.e. a discontinuity in the tangent
A V-shaped hull or V-shaped bow as used herein may be regarded as a hull (or bow) which in lateral cross-sections resembles a V-shaped. Such V-shapes may be modified by spray rails, chines or steps (or step portions) as herein throughout described.

Water or fluids in general can separate from a surface, particularly when encountering a step or protrusion. Bows as herein proposed comprise steps specifically designed to cause a separation of water flow from the bow surface, and to allow air entry into them as the vessel is sailing. The mixture of water and air may result in an "atomization" or "spraying" of the water. The phenomenon may also be referred to as cavitation.

This results in the surface of the lake or sea water on which the boat is moving to break and divide into multiple micro droplets atomized as a spray, instead of being a continuous barrier that offers considerable resistance, which increases proportionally to the speed. Such an effect makes the water resistance much smaller than that of a continuous water surface and consequently, friction between the hull and the water is thereby reduced, and energy consumption can be decreased.

According to the first aspect, the base portion is arranged close to the keel, and thus remains close to the waterline. This means that the base portion is flushed by water under normal circumstances. The bow according to this example may be relatively voluminous which means that it has a lot of buoyancy, which aids in planning.

Preferred embodiments of the present invention are set out in the dependent claims.

In some embodiments, the bow along at least a portion of its keel furthermore comprises a skid, wherein the skid comprises a inclined side surface delimited by a vertical step portion extending longitudinally on each side of the plane of symmetry.

In these embodiments, the phenomenon of atomization or "spraying" may be caused by the vertical step portion, by which a flow separation and air entry occur. The skid along a portion of the length of the hull increases hydrodynamic lift and is particularly suitable for reducing impacts of the bottom of the hull on the water. By reducing these impacts ("slamming"), the speed of the vessel may be better obtained.

The skid in combination with the base portion provides for a connection between air channels of the base portion down to the air channel along the skid. Air is thus able to reach alongside of the skid even if the water reaches higher along the bow. The combination also gives the bottom of the hull more volume which means that it only has to enter into the water very little to increase buoyancy.

Bows according to the invention, in addition to the features of claim 1, in preferred embodiments may be combined with the following non-exhaustive list of features.

In some embodiments, the base portion may comprise an additional step or step portion delimiting the base portion in the vertical direction. In some embodiments, the the first step portion that delimits the base portion in the vertical direction comprise a first lateral step directed outwards and extending horizontally downstream on each side of the symmetry plane. Optionally the first lateral steps extending horizontally on both sides of the symmetry plane constitute a step forward in the symmetry plane. And optionally, the first lateral step portion extending horizontally may be divided into two or more sub-steps, substantially parallel, a sub-step being disposed above the other.

On the one hand, these steps produce high pressure areas which increase the hydrodynamic lift of the bow, and on the other hand, they can lead to flow separation and the described atomization.

The described steps that determine the base in the lengthwise direction can be combined with the described steps that determine the base in the vertical direction.

In some embodiments, the sides of the skid can be substantially straight, in others they can also be curved. In some embodiments, the skid of the keel runs along about one third or less of the length of the keel. The skid may comprise a first portion downstream from the stem that comprises a V-section with both curved-concaves sides in a crest-like fashion. A second portion further downstream may have less height, and may have a substantially straight V-shape.

In some embodiments, behind the first inwards step portion extending vertically the bow may comprise -viewed from the front - another inwards step portion disposed in such a way so that atomization of water is caused. For larger vessels, providing a second step may be advantageous. This can result in separation of water flow and the inlet of air. Similarly, in some embodiments, the bow may comprise more than one skid, that is, it may comprise one or more longitudinal vertical steps.

In some examples, the first horizontal step described forms a frontal arrow-shaped protrusion which protrudes with respect to the described base of the bow and around the hull, aiming to most of the water to be atomized and not be thrown forwards, thus avoiding penetration into the boat's through the deck.

In some embodiments, the bow may comprise a first front protrusion extending on both sides of the symmetry plane and which is determined by one or more second step portions suitable to cause flow separation. The first frontal protrusion may be located between the base and the top of the stem. The first frontal protrusion may have a shape similar to the base, but in general it may be wider.

In some embodiments, the second steps that determine the first protrusion comprise a second essentially lateral step that extends substantially horizontally on both sides of the symmetry plane. Optionally, this second step essentially horizontal forms a step forward in the plane of symmetry. Optionally, the second steps that determine the protrusion comprise a second lateral step that extends essentially vertically.

Thus, similarly to what has been described with respect to the base, also the flow around the protrusion may cause atomization of water and a reduction of the corresponding resistance. At sea, wave and weather conditions where water reaches the height of the protrusion, the resistance may also be reduced accordingly.

In some embodiments, the bow may comprise a second protrusion between the first protrusion and the top of the stem, extending on both sides of the symmetry plane. Optionally, the second frontal protrusion on each side of the symmetry plane is determined by a lateral step suitable to cause a flow separation.

In some embodiments, sections that form the stem between the steps extend at angles between 60 - 90° to the horizontal plane. That is to say, the sections of the stem that are a component of the base, and optionally the first and the second protrusions are very inclined. Consequently the bow may be relatively short. Rake angles may thus be relatively high.

Following with more particularities of the hull as disclosed in examples of the present invention, it should also be noted that the first lateral step extending horizontally, in some embodiments, may be divided into two smaller sub-steps, thus further favoring the above mentioned atomizing effect. Moreover, this first step extends laterally dividing into three chines, because they are juxtaposed on spray rails. These, analogously to the bow supporting steps, also generate "spraying" or water atomization, and therefore assist in reducing friction.

In one particular embodiment, the hull may be essentially flat or smooth V-shaped across the whole hull length except for the bow. That way, a comfortable passenger ship may be provided which can also be faster thanks to the already described particular shapes of the bow. In some embodiments, the bow may comprise a first front protrusion extending on both sides of the symmetry plane and which is determined by one or more second steps suitable to cause flow separation. The first frontal protrusion may be located between the base and the top of the stem. The first frontal protrusion may have a shape similar to the base, but in general it may be wider.

It is noteworthy that bows of the invention are applicable to both new construction and existing vessels, in which case the existing hull is modified, by means of any known and appropriate technique, in order to provide the bow with the structural dynamic configuration steps described above. In general, an existing hull may be modified by superposing the base as hereinbefore described and/or a skid as hereinbefore described and/or first and/or second protrusions.

As a result, bows according to the invention, while achieving the aforementioned water atomization on the surface, which results in a resistance reduction and fuel economy, mitigate the impact or slamming against waves, which is equally important, especially in the case of passenger boats.

Specifically, examples of the present invention provide the market a new "supercavitation" typology bow that can significantly improve comfort, economy and safety of passengers due to its structural configuration, which provides the following advantageous effects:

### Significant bow volume:

Although sharp Titanic type bows are very elegant, they have little buoyancy and result in impressive heaving or pitching movements. This type of bow does not add volume and, by the Archimedes principle, the lack of volume does not provide buoyancy neither upward momentum for dynamic effect.

In order to obtain a fast and safe navigation, a great volume providing buoyancy is necessary. Examples of bows of the present invention provide a large volume on the bottom as well as a huge volume on top that offers great safety on passenger boats. They also provide many planes which give dynamic lift to this bow.

### Combat viscous resistance of water:

Said resistance occurs because bows are formed by high pressure zones followed by a low pressure zone which are ventilated, allowing for the possibility of air coming in. This sudden change of pressure produces water atomization, which determines a supercavitation by ventilation. Such atomization forms a series of empty spheres that, acting as a kind of bearings, lubricate the hull cause these regions to have a low resistance to friction, causing the effect of the viscosity of the water to disappear or at least be reduced very significantly.

### Increased dynamic thrust:

A series of flat surfaces or steps act as areas of high pressure. Such high pressure areas transmit water's thrust energy in a dynamic way, and act as a significant and instant reinforce, providing positive flotation momentum to the boat.

### DESCRIPTION OF THE DRAWINGS

In order to complement the present description and aiming to a better understanding of the characteristics of the invention, a set of drawings is described in the following by way of illustrative and non-limiting examples, and attached to the description:
Figures 1 and 2 illustrate perspective views, bottom and side views respectively, of a first embodiment of a bow according to the present invention with atomization characteristics for ships. The structural configuration of the bow and the dynamic atomization steps in the surfaces can be clearly appreciated from the views.
Figures 3 and 4 illustrate respectively front and side views of a boat's hull equipped with an example of an atomizer structure bow according to the same example of the present invention illustrated in the preceding figures. In both cases, only the part of the bow which protrudes above water surface when the vessel is stationary is illustrated.
Figure 5 illustrates a schematic representation of a profile of the example of an atomizer structure bow of the invention, where the illustrated dynamic steps can be appreciated. The section in question is located in a front portion of the base (3). Figure 5b illustrates very schematically a first lateral step portion and the flow around the base of the bow and the creation of a turbulence at the step in the surface.
Figures 6 and 7 illustrate respectively inferior and side perspective views of a second example of a bow according to the invention. In this case, a slightly different example of the bow where the keel has a skid with curved inclines surfaces.
Figure 8 illustrates an inferior perspective of a hull with a bow according to the second example of the invention. The way air flows around the bow and mixes with water when sailing has been illustrated.
Figures 9a and 9b schematically illustrate other examples of bows according to the invention.
Figures 10a, 10b and 10c illustrate respectively a side view, a longitudinal section in the plane of symmetry and several vertical sections of another example of a bow according to the invention.
Figures 11a - 11c illustrate respectively another example of a bow according to the invention, a vertical section including a preferred skid and an extended view of the skid which may be used in embodiments of the present invention.

### DETAILED DESCRIPTION OF EXAMPLES

In view of the above figures and in accordance with the numbering, examples of preferred embodiments of a boat's bow and hull can be seen in such figures. Said examples cover parts and characteristic elements illustrated and described in detail hereafter. The following numbering has been used to designate each of these elements:
1. bow
2. spray-rails
3. base portion of the bow
4. first lateral step extending vertically
5. stem
6. first lateral step extending horizontally
6a and 6b. sub-steps
7. keel
8 and 8'. skid
9. foot of the stem
10. top of the stem
11. second lateral step portion extending horizontally
12. first front protrusion
12a. side surface of first protrusion
12b. side and longitudinal surface of first protrusion
13. chines
15. second lateral step portion extending vertically
18. second protrusion
18a. side surface of second protrusion
18b. side and longitudinal surface of second protrusion
19. third lateral step portion
20. vertical step of skid

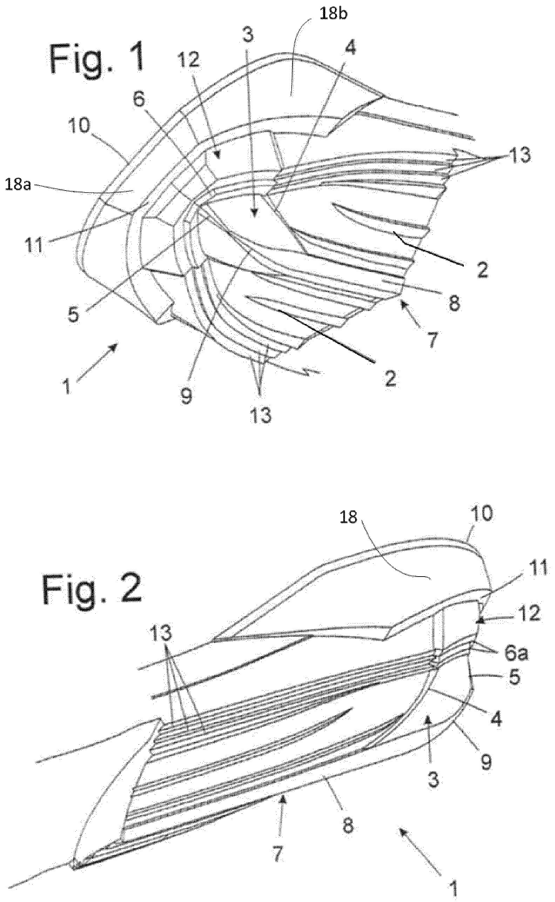

Thus, as illustrated in Figures 1-5, the bow (1) of this example of the invention, constitutes the front of a hull of a new or existing vessel. The hull may be essentially flat throughout most of its length and may have spray-rails (2).

In this example, the bow is a V-shaped one, characterized by consisting of a base portion (3) which is "protruding" from the rest of the hull, and which is delimited by a series of steps or step portion (4, 6) with a specific arrangement and configuration so as to constitute an element of dynamic lift on the water surface.

During navigation of the vessel, the steps along the surface can cause turbulence as a result of which an air inlet is produced, which causes the atomization of water on said surface which, in turn, causes a reduction of friction.

The exact dimensions of the steps necessary to cause the described effects may vary depending on the size of the boat and on the boat speed.

In this specific example, these steps consist of a lateral step (4), which extends substantially vertically (although it may be a bit inclined) at a short distance from the stem (5), which has a wide shear edge that determines a bulky bow with a relatively large volume. At least one first lateral step portion (6) which is located at the top of said base (3) of the bow and extends substantially horizontally.

The lateral step portion (4) which extends vertically is an inwards step (viewed from the front) so that the water flow follows the surface of the base (3) up to the step and separates from the boat's surface at the step, and a turbulent flow and the already mentioned water atomization may be created. The step (4) creates a substantially vertical air channel.

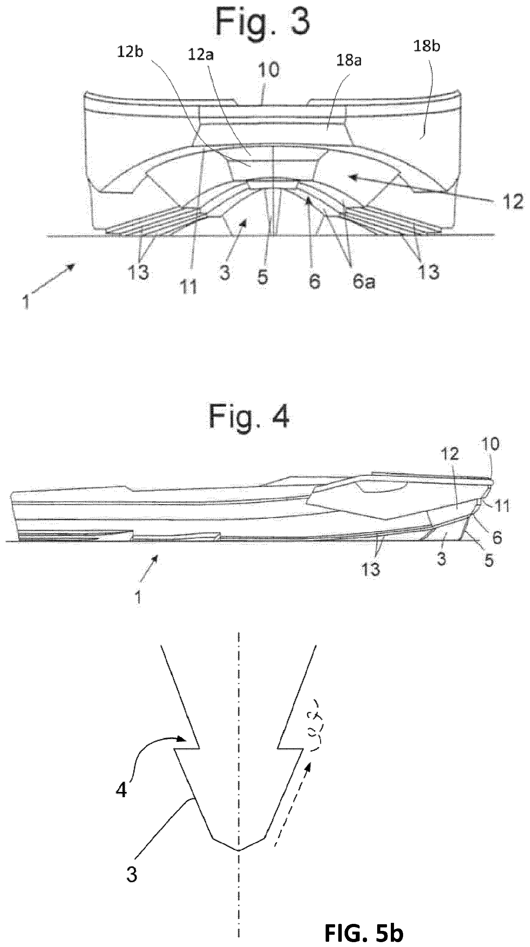

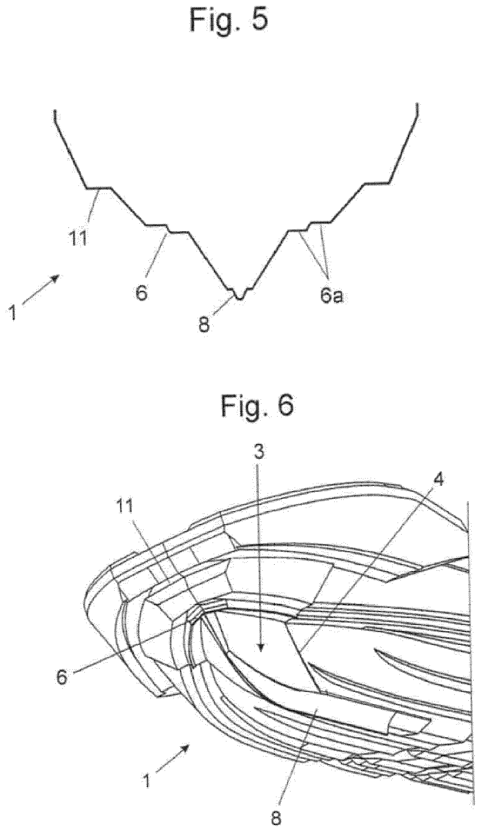

The first side step (4) is very schematically illustrated in figure 5b also. Figure 5b illustrates a section of the bow with a horizontal plane.

Furthermore, the keel (7) of the hull may include a skid (8) extending along e.g. one third or less of the length from stem (9) to stern. The skid (8) can have a substantially V-shaped cross section which serves to improve the hydrodynamic lift of the vessel and to reduce the impact of the hull's bottom against the sea.

The skid preferably terminates in a substantially vertical step. Details are shown below. The vertical step creates once again spaces for air to enter and water atomization is achieved again. The vertical step of the skid which extends in longitudinal direction creates a longitudinal air channel. The air channel created by the side step (4) is preferably connected to the longitudinal air channel created by the skid's step. That way, air can enter through the vertical channel and reach the horizontal channel under the sea.

In addition, preferably, above the first lateral step (6) and under the top of the stem (10) a second lateral step (11) extending horizontally and covering the entire upper bow area to both sides is illustrated. It can cause turbulence to atomize the water in the same way as other steps described in the bow (1) do.

In this specific example, between the first step (6) and the second horizontal step, a forward arrow-shaped protrusion (12) is found, which protrudes above the base (3) of the bow and from the rest of the hull. Between the first protrusion (12) and the top of the stem (10) a second protrusion can be formed, which also protrudes forward from the first front protrusion (12). Both forward protrusions can serve to avoid the entrance of water onto the deck.

Optionally, said first step (6) is divided into two sub-steps (6a) extending horizontally and may be formed into three chines (13) running alongside the hull. As mentioned before, also spray rails may be provided. These chines and spray-rails may also cause turbulence and atomize water in a spray form, thus reducing the friction of the hull over the water surface.

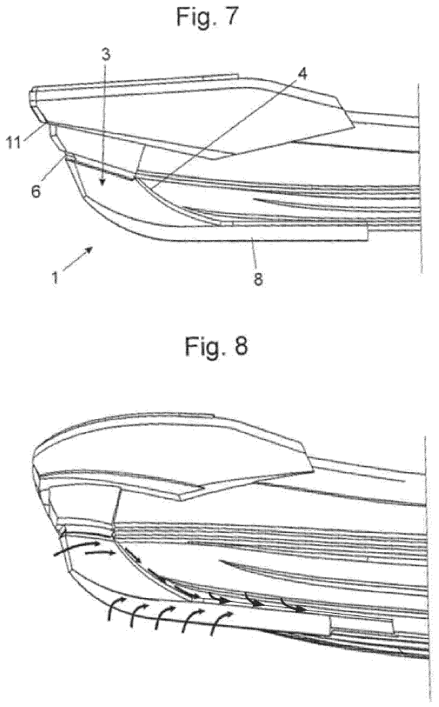

Figures 6-8 illustrate another example of a bow according to the invention, additionally having a skid which has a V-section with both concave-curved sides as seen in the example of Figures 6 and 7. Such a skid shape can achieve hydrodynamic lift by creating areas of high pressure under the skid. Figure 8 serves to illustrate the flow of air around the bow and into the aforementioned air channels. It may be seen how the air channels can connect. Similarly, the air channels formed behind the first protrusion as described before may connect with the vertical air channel behind the base portion.

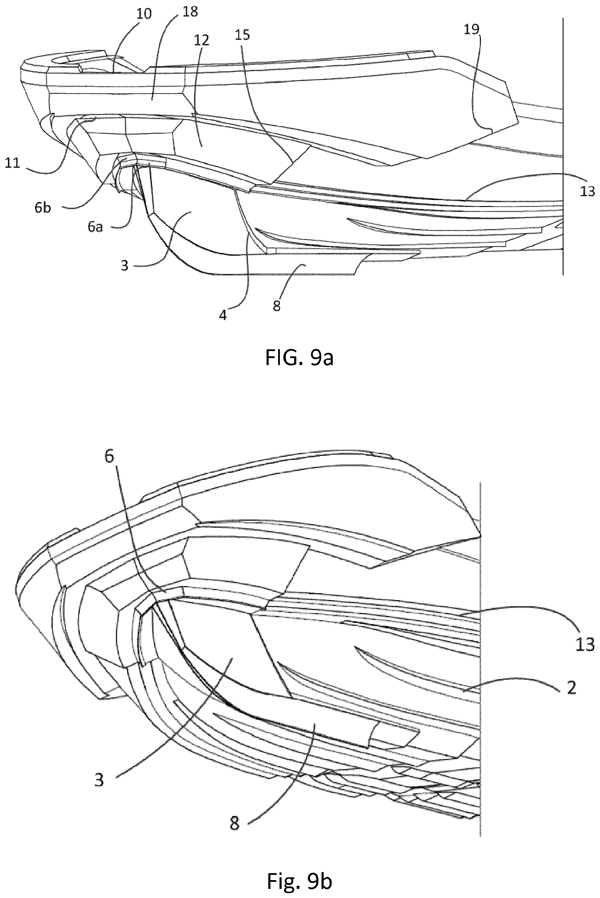

Figures 9a and 9b illustrate further examples of bows. The main difference between both examples lies in the first step arranged horizontally that delimits the base (3) in the vertical direction. In the example of figure 9a, the first horizontal step is divided in two sub-steps 6a and 6b, whereas in the example of figure 9b there is a single first horizontal step. Moreover, figure 9a illustrates the vertical step portion which forms the edge of the skid (8) and connects with the side step (4).

A second lateral step (15) and a third lateral step (19) (both extending vertically) can also be observed in Figure 9a. The second step (15) determines or defines the boundary of the second protrusion (12) in the longitudinal direction. This second step may be a step "inwards" (seen from the front), i.e. the surface of the bow deflects toward the symmetry plane in order to create an area where air can enter just behind the step and thus atomization may be produced. Preferably, the second vertical side step (15) again creates an air channel which connects to the air channel created by the first vertical side step (4) in a similar manner as schematically illustrated in figure 5b.

The third vertical step (19) forms the boundary of the third protrusion (18) in the longitudinal direction. Also in this case, the step can be inwards, i.e. towards the plane of symmetry. Behind (longitudinally) the second protrusion (18) and the first protrusion (12) additional ventilated areas can thus be formed.

In the various examples described, the first protrusion (12) and second protrusion (18) are divided into a first surface (12a and 18a) which extends essentially laterally and one second surface (12b, 18b) extending substantially laterally and longitudinally.

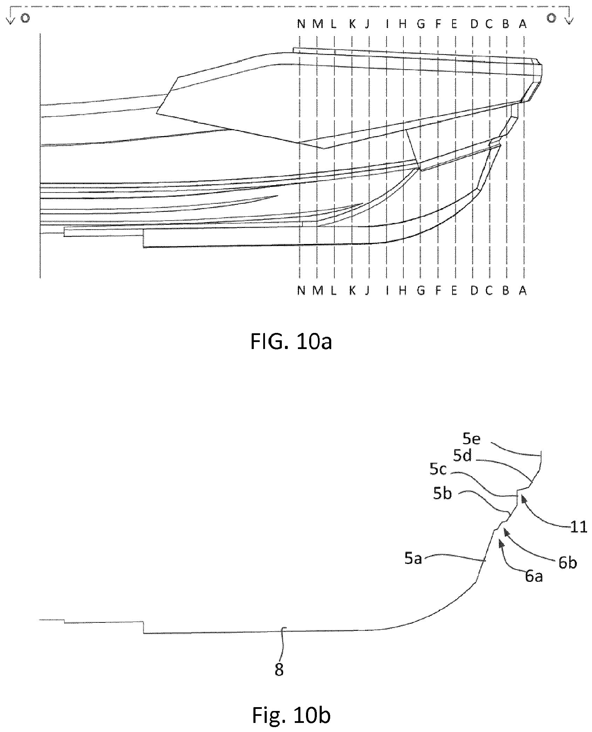

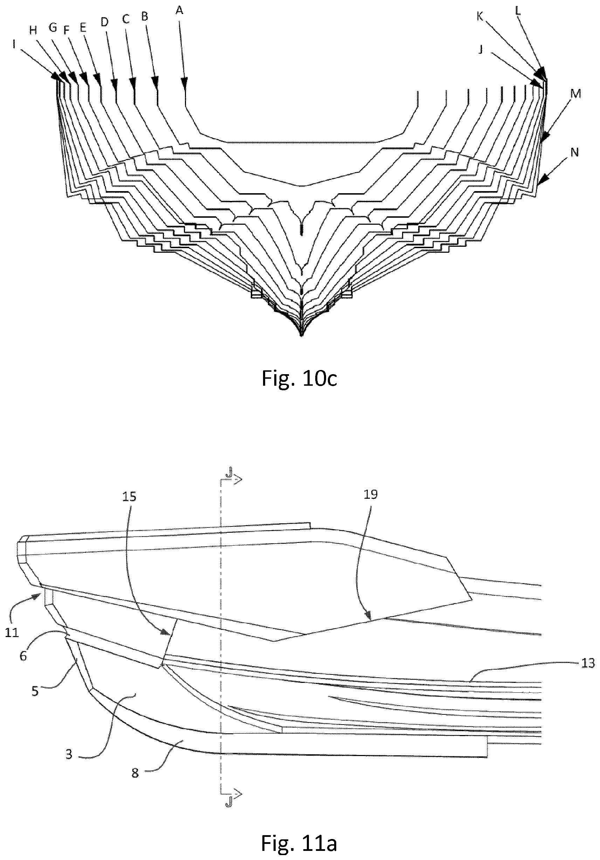

Figures 10a, 10b and 10c illustrate respectively a side view, a longitudinal section in the plane of symmetry and several vertical cross-sections of another example of a bow. These drawings may be considered as drawn to scale.

Figure 10a illustrates sections A-A - N-N that can be seen in figure 10c. Figure 10b illustrates how the skid (8) protrudes vertically with respect to the rest of the hull. Furthermore, figure 10b illustrates steps 6a, 6b and 11, located between the base (3) and the first protrusion (12) and between the first protrusion (12) and the second protrusion (18) respectively. It can be appreciated that the steps create leaps forward in the symmetry plane. On the one hand, atomizing ventilated regions are formed, and on the other hand, the protrusions may ensure that atomized water does not bother the passengers from the boat.

In figure 10b one may also observe that a downstream portion of the skid may be shorter than an upstream portion of the skid. In a particular example, an upstream portion may have concave side surfaces, whereas a downstream portion may have straight side surfaces.

Figure 10b also illustrates that the bow is relatively short, thereby reducing the wet surface. Sections (5a) - (5e) that form the stem (5) between the steps (6a, 6b and 11) are arranged to angles between 0° and 30° with respect to the vertical. Sections (5c) and (5e) that belong to the first (12) and second protrusions (18) are substantially vertical, whereas sections (5a), (5b) and (5d) are located in angles between 20° and 30° with respect to the vertical, i.e., they have an inclination of 60° to 70°.

Figure 10c illustrates the variations in the angle of the various sections between steps. The first section (which is difficult to see in Figure 10c) belongs to the skid (8). The second section belongs to the base (3). The remaining sections belong (depending on the section) to the first and second protrusions.

It can be observed that the surfaces of the base (3) form an angle with respect to the vertical of about 20°. Generally speaking, the following section is less steep and may form an angle with respect to the vertical of about 45° to 60°. The bow can thus be considered relatively wide.

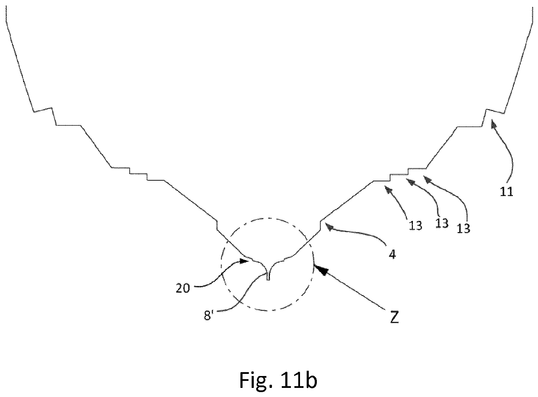

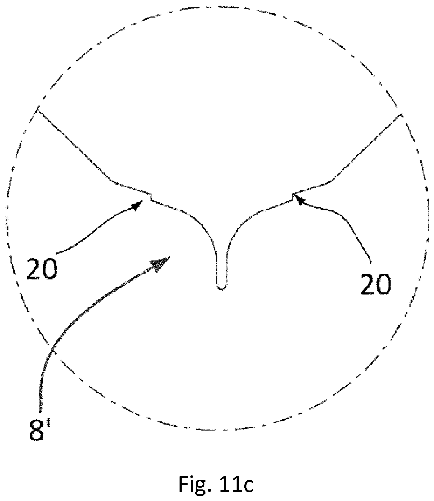

Figures 11a - 11c illustrate respectively another example of a bow according to the invention, a vertical section including a preferred skid and an enlarged view of the skid. Figure 11 illustrates the curved and concave form of skid 8'. Chines (13) of the hull are again indicated in figure 11b. Different steps (4) and (11) are also visible.

In the detailed view of figure 11c, the volume of the bow may be appreciated. Directly following the vertical step, the deadrise angle of the base portion may be low, e.g. under 20°. Then the dearies angle may increase. The end of the base portion is then defined with the already mentioned vertically extending step portion.

In particular, in the above description, only examples of monohulls were shown. However, examples of the present invention are equally applicable to multihull vessels, such as e.g. catamarans, in which it could increase the buoyancy of the hulls significantly.

The invention is defined by the scope of the following claims.

## Claims

1. Bow for a hull of a vessel that has a plane of symmetry extending along a longitudinal axis and a vertical axis of the hull, the bow being substantially V-shaped and having a stem and a keel, and wherein
a base portion (3) arranged just above the keel extends downstream from at or near the stem and comprises a substantially smooth base surface on each side of the plane of symmetry, wherein
each of the base surfaces is delimited in the longitudinal direction by a first lateral step portion (4) which extends substantially vertically,
the first lateral step portion (4) being a step inwards as seen from the front constituting an air channel with an air inlet,
and the first lateral step (4) being arranged such as to cause water flow separation from the bow, resulting in cavitation.

2. Bow according to claim 1, wherein the bow along at least a portion of its keel furthermore comprises a skid (8), wherein the skid comprises an inclined side surface delimited by a vertical step portion (20) extending longitudinally on each side of the plane of symmetry.

3. Bow according to claim 2, wherein the vertical step portion (20) of the skid (8) is connected with the first lateral step portion (4) extending vertically.

4. Bow according to claim 2 or 3, wherein each inclined side of the skid is substantially straight.

5. Bow according to claim 2 or 3, wherein each inclined side of the skid is substantially curved.

6. Bow according to any of claims 2 - 5, wherein the skid (8) extends along approximately one third of the length of the hull.

7. Bow according to any of claims 1 - 6, wherein each of the base surfaces is delimited in the vertical direction by a first lateral step portion (6) which extends longitudinally, and which when seen from below is an outward step portion (6).

8. Bow according to claim 7, wherein the first lateral step portion (6) which extends longitudinally is divided into two or more sub-steps, which are substantially parallel, one sub-step being disposed above the other.

9. Bow according to any of claims 1 - 8, comprising a first front protrusion (12) extending on both sides of the symmetry plane and which is delimited by one or more second step portions (15, 11) arranged such as to cause a flow separation, and which is arranged above the base (3).

10. Bow according to claim 9, wherein the second steps which determine the protrusion comprise a second essentially horizontal lateral step (11) extending on both sides of the symmetry plane.

11. Bow according to any of claims 1 to 10, wherein the base surfaces (3) extend at an angle of between 15 - 45 ° to the plane of symmetry, and preferably at an angle of approximately 20 - 30°.

12. Bow according to any of claims 1 to 11, wherein the sections that form the stem between the step portions extend at angles between 60 - 90° to the horizontal plane.

13. Hull comprising a bow according to any of claims 1 to 12.

14. Vessel comprising a hull according to claim 13.

15. Vessel according to claim 14 wherein the vessel is a planing vessel.

## Patentansprüche

1. Bug für einen Bootsrumpf, der eine Symmetrieebene hat, die sich entlang einer Längsachse und einer vertikalen Achse des Rumpfs erstreckt, wobei der Bug im Wesentlichen V-förmig ist und einen Steven und einen Kiel hat, und wobei
ein direkt über dem Kiel angeordneter Basisteil (3) sich nach hinten von am oder in der Nähe des Stevens erstreckt und eine im Wesentlichen glatte Basisfläche an jeder Seite der Symmetrieebene umfasst, wobei
jede Basisfläche in der Längsrichtung durch einen ersten seitlichen Stufenteil (4) begrenzt ist, der sich im Wesentlichen in vertikaler Richtung erstreckt,
wobei der erste seitliche Stufenteil (4) eine nach innen gerichtete Stufe von der Vorderseite gesehen ist, die einen Luftkanal mit einer Lufteintrittsöffnung bildet,
und wobei die erste seitliche Stufe (4) derart angeordnet ist, dass sie eine Ablösung der Wasserströmung vom Bug hervorbringt, was die Entstehung von Kavitation zur Folge hat.

2. Bug nach Anspruch 1, wobei der Bug entlang mindestens eines Teils seines Kiels ferner eine Kufe (8) umfasst, wobei die Kufe eine geneigte Seitenfläche umfasst, die durch einen vertikalen Stufenteil (20) begrenzt ist, der sich in Längsrichtung an jeder Seite der Symmetrieebene erstreckt.

3. Bug nach Anspruch 2, wobei der vertikale Stufenteil (20) der Kufe (8) mit dem sich in vertikaler Richtung erstreckenden ersten seitlichen Stufenteil (4) verbunden ist.

4. Bug nach Anspruch 2 oder 3, wobei jede geneigte Seite der Kufe im Wesentlichen gerade ist.

5. Bug nach Anspruch 2 oder 3, wobei jede geneigte Seite der Kufe im Wesentlichen gebogen ist.

6. Bug nach einem der Ansprüche 2 - 5, wobei die Kufe (8) sich entlang ungefähr eines Drittels der Länge des Rumpfs erstreckt.

7. Bug nach einem der Ansprüche 1 - 6, wobei jede Basisfläche in der vertikalen Richtung durch einen ersten seitlichen Stufenteil (6) begrenzt ist, der sich in Längsrichtung erstreckt, und der von unten gesehen ein nach außen gerichteter Stufenteil (6) ist.

8. Bug nach Anspruch 7, wobei der erste seitliche Stufenteil (6), welcher sich in Längsrichtung erstreckt in zwei oder mehr im Wesentlichen parallele Teilstufen geteilt ist, wobei eine Teilstufe auf der anderen angeordnet ist.

9. Bug nach einem der Ansprüche 1 - 8, umfassend einen ersten vorderen Vorsprung (12), der sich an jeder Seite der Symmetrieebene erstreckt und welcher durch einen oder mehrere zweite Stufenteile (15, 11) begrenzt ist, die derart angeordnet sind, dass eine Ablösung der Strömung hervorgebracht wird, und welcher über der Basis (3) angeordnet ist.

10. Bug nach Anspruch 9, wobei die zweiten Stufen, welche den Vorsprung bestimmen eine zweite im Wesentlichen horizontale seitliche Stufe (11) umfassen, die sich an beiden Seiten der Symmetrieebene erstreckt.

11. Bug nach einem der Ansprüche 1 bis 10, wobei die Basisflächen (3) sich in einem Winkel von zwischen 15 - 45° zur Symmetrieebene, und vorzugsweise in einem Winkel von ca. 20 - 30°, erstrecken.

12. Bug nach einem der Ansprüche 1 bis 11, wobei die Abschnitte, die den Steven zwischen den Stufenteilen bilden sich in Winkeln von zwischen 60 - 90° zur horizontalen Ebene erstrecken.

13. Rumpf umfassend einen Bug nach einem der Ansprüche 1 bis 12.

14. Boot umfassend einen Rumpf nach Anspruch 13.

15. Boot nach Anspruch 14, wobei das Boot ein Gleitboot ist.

## Revendications

1. Proue pour une coque d'un bateau qui a un plan de symétrie s'étendant le long d'un axe longitudinal et d'un axe vertical de la coque, la proue ayant une forme essentiellement de V et ayant une étrave et une quille, et dans laquelle
une partie de base (3) disposée justement au-dessus de la quille s'étend vers l'arrière de, dans ou près de l'étrave et comprend une surface de base essentiellement lisse de chaque côté du plan de symétrie, dans laquelle
chacune des surfaces de base est délimitée dans la direction longitudinale par une première partie de décrochement latéral (4) qui s'étend en direction essentiellement verticale,
la première partie de décrochement latéral (4) étant un décrochement vers l'intérieur vu de devant constituant un canal d'air avec une entrée d'air,
et le premier décrochement latéral (4) étant disposé de façon à entraîner une séparation du débit d'eau de la proue, ce qui provoque de la cavitation.

2. Proue selon la revendication 1, dans laquelle la proue le long d'au moins une partie de sa quille comprend en outre une béquille (8), dans laquelle la béquille comprend une surface latérale inclinée délimitée par une partie de décrochement vertical (20) s'étendant longitudinalement de chaque côté du plan de symétrie.

3. Proue selon la revendication 2, dans laquelle la partie de décrochement vertical (20) de la béquille (8) est connectée à la première partie de décrochement latéral (4) s'étendant verticalement.

4. Proue selon la revendication 2 ou 3, dans laquelle chaque côté incliné de la béquille est essentiellement droit.

5. Proue selon la revendication 2 ou 3, dans laquelle chaque côté incliné de la béquille est essentiellement courbe.

6. Proue selon l'une quelconque des revendications 2 - 5, dans laquelle la béquille (8) s'étend le long d'environ un tiers de la longueur de la coque.

7. Proue selon l'une quelconque des revendications 1 - 6, dans laquelle chacune des surfaces de base est délimitée dans la direction verticale par une première partie de décrochement latéral (6) qui s'étend longitudinalement, et qui, vue de dessous est une partie de décrochement vers l'extérieure (6).

8. Proue selon la revendication 7, dans laquelle la première partie de décrochement latéral (6) qui s'étend longitudinalement est divisée en deux ou plus sous-décrochements, qui sont essentiellement parallèles, l'un sous-décrochement étant disposé au-dessous de l'autre.

9. Proue selon l'une quelconque des revendications 1 - 8, comprenant une première saillie avant (12) s'étendant des deux côtés du plan de symétrie et qui est délimitée par une ou plus secondes parties de décrochement (15, 11) disposées de façon à entraîner une séparation du débit, et qui est disposée au-dessus de la base (3).

10. Proue selon la revendication 9, dans laquelle les seconds décrochements qui déterminent la saillie comprennent un second décrochement latéral essentiellement horizontal (11) s'étendant des deux côtés du plan de symétrie.

11. Proue selon l'une quelconque des revendications 1 à 10, dans laquelle les surfaces de base (3) s'étendent selon un angle d'entre 15 - 45° par rapport au plan de symétrie et, de préférence, selon un angle d'environ 20 - 30°.

12. Proue selon l'une quelconque des revendications 1 à 11, dans laquelle les sections qui forment l'étrave entre les parties de décrochement s'étendent selon des angles d'entre 60 - 90° par rapport au plan horizontal.

13. Coque comprenant une proue selon l'une quelconque des revendications 1 à 12.

14. Bateau comprenant une coque selon la revendication 13.

15. Bateau selon la revendication 14, où le bateau est un hydroglisseur.
